# EUROPEAN PATENT APPLICATION

(11) **EP 1 164 507 A2**
(43) Date of publication of application: **19.12.2001**
(21) Application number: 01304775.8
(22) Date of filing: 31.05.2001
(51) Int. Cl.: G06F 17/30

(54) **Database updating method using recordable optical disc and apparatuses therefor**

(30) Priority: 17.06.2000 KR 2000033463
(71) Applicant: SAMSUNG ELECTRONICS CO., LTD., Suwon-City, Kyungki-do (KR)
(72) Inventor: Seo, Joong-eon, Uiwang-si, Gyeonggi-do (KR); Ko, Jung-wan, Yongin-si, Gyeonggi-do (KR); Kim, Byung-jun, Paldal-gu, Suwon-si, Gyeonggi-do (KR)
(74) Representative: Robinson, Ian Michael

(57) **Abstract**

A method, which enables online modification or update of a database stored on a recordable optical disc and an apparatus thereof are provided. The information updating apparatus includes a computer network (102); a server (106) for providing database-related information through the computer network (102); and a user computer (104) for accessing the server through the computer network and retrieving the database-related information. The user computer (104) includes an optical disc recording/reproducing apparatus (104e) for recording data in or reproducing data from an optical disc (108), in which a database and the date and time of the last update is recorded, and is programmed to record modified/updated data, which is transmitted from the server, on the optical disc. The server (106) is programmed so that the server receives the date and time of the last update, which is recorded on the optical disc (108) and transmitted from the user computer (104), and if modification/update is needed, transmits modified/updated data to the user computer (104) in order for the user computer to record the modified/updated data on the optical disc (108) through the optical disc recording/reproducing apparatus (104e). The method and apparatuses provide a user with a means for easily making the user database always updated with latest data.

## Description

The present invention relates to a database updating method and apparatus, and more particularly, to a method for enabling to modify/update a database in online mode, using a recordable optical disc as a recording medium, and appropriate apparatuses therefor.

There are many products in the current market that need continuous updates. Examples of such products are karaoke systems, encyclopedias, and navigational systems, of which corresponding databases and applications programs need frequent modification and updates.

Conventional database modification/update methods can be roughly divided into two groups. Hereinafter, one of the two groups will be referred to as an offline database operating method and the other will be referred to as an online database operating method.

In the offline database operating method, a read-only disc or a board, on which a plurality of read-only memories (ROMs) are mounted, is sold. Later, if the amount of data to be updated or modified is small, a file or a mask ROM having the data is distributed. If the amount of data to be updated or modified is great, a new disc or a new board is manufactured and distributed freely or sold.

In the online database operating method, only a basic system or program is distributed. Then a user is guided to register, and a needed database is provided online. When a user requests data, the data is transmitted to the user's system connected to the database so that the user can access the data.

Here, in the offline database operating method, if updating data occurs frequently, it costs both the user and the vendor a great amount of money. Also, updating uses a lot of time. That is, even in a case where only data is updated, data is updated, distributed through a route, and installed by the user.

In addition, if a program or system is updated, much more time is consumed. For example, in a karaoke system, songs always need to be added, and frequent updating costs time and money. If frequent updates occur after the initial installation, it will cost the user much time, money, and efforts. If frequent updates do not occur, it causes users to complain about outdated product or services.

Compared to the offline database operating method, the online database operating method has the advantage of less time and expense needed for updating.

However, to use a database, the user should be able to access the network and provide user information, and therefore there can be location and situational restrictions. That is, the user cannot use the updated data or cannot provide user information in a place where a computer system is not installed. Also, to maintain a continuously connected environment costs the user more money.

An aim of the present invention is to provide a database updating apparatus and database updating method, in which consumption of time and expense is reduced. Preferred aims are to provide a disk recording/reproducing apparatus, a user computer and a server for use in the apparatus or method.

In a first aspect of the present invention, there is provided a database updating apparatus a database updating apparatus having a computer network; a server for providing database-related information through the computer network; and a user computer for accessing the server through the computer network and retrieving the database-related information, in which the user computer includes an optical disc recording/reproducing apparatus for recording data in or reproducing data from an optical disc, in which a database and the date and time of the last update is recorded, and is programmed to record modified/updated data, which is transmitted from the server, on the optical disc, and in which the server is programmed so that the server receives the date and time of the last update, which is recorded on the optical disc and transmitted from the user computer, and if modification/update is needed, transmits modified/updated data to the user computer in order for the user computer to record the modified/updated data on the optical disc through the optical disc recording/reproducing apparatus.

In a second aspect of the present invention, there is provided a database updating method having the steps of permitting a user computer having a recordable disc, on which is recorded a database that a database vendor can provide, to access the server of the database vendor through a computer network; receiving the date and time of the last update of the database recorded on the disc from the user computer and determining whether or not modification/update of the database is needed; and transmitting modified/updated data to the user computer if modification/update is needed so that the user computer records modified/updated data on the disc.

In a third aspect of the present invention, there is provided a server for providing database-related information through a computer network, the server having a database server for storing at the minimum modified/updated data of the database and the date and time of update; a means for receiving the date and time of the last update of a database installed in a user computer from the user computer which accesses the server through the computer network; a means for determining whether or not an update is needed in the database installed in the user computer by comparing the date and time of the last update input by the user with the date and time of update stored in the database server; and a means for reading the modified/updated data from the memory and transmitting the data, if the determining means determines that an update of the database installed in the user computer is needed.

In a fourth aspect of the present invention, there is provided an optical disc recording/reproducing apparatus which is installed in a user computer and records/reproduces a recordable disc, the apparatus having a recordable disc on which an updatable database and its update date and time are recorded; an inputting means for receiving modified/updated data of the database from the user computer; a recording means for recording the modified/updated data of the database, the date and time of update, and an updated address table on the disc; and a means for generating an updated address table having addresses, of which the updated contents are recorded on the disc, and providing the updated address table to the recording means.

For a better understanding of the invention, and to show how embodiments of the same may be carried into effect, reference will now be made, by way of example, to the accompanying diagrammatic drawings in which:
Figure 1 is a block diagram of the structure of a database updating apparatus according to the present invention;
Figure 2 is a flowchart of an embodiment of a database updating method according to the present invention;
Figure 3 is a block diagram of the structure of a server according to the present invention;
Figure 4 is a block diagram of an embodiment of a disc recording and/or reproducing apparatus according to the present invention; and
Figure 5 is a block diagram of another embodiment of a disc recording and/or reproducing apparatus according to the present invention.

Hereinafter, embodiments of the present invention will be described in detail with reference to the attached drawings. The present invention is not restricted to the following embodiments, and many variations are possible within the spirit and scope of the present invention. The embodiments of the present invention are provided in order to more completely explain the present invention to anyone skilled in the art.

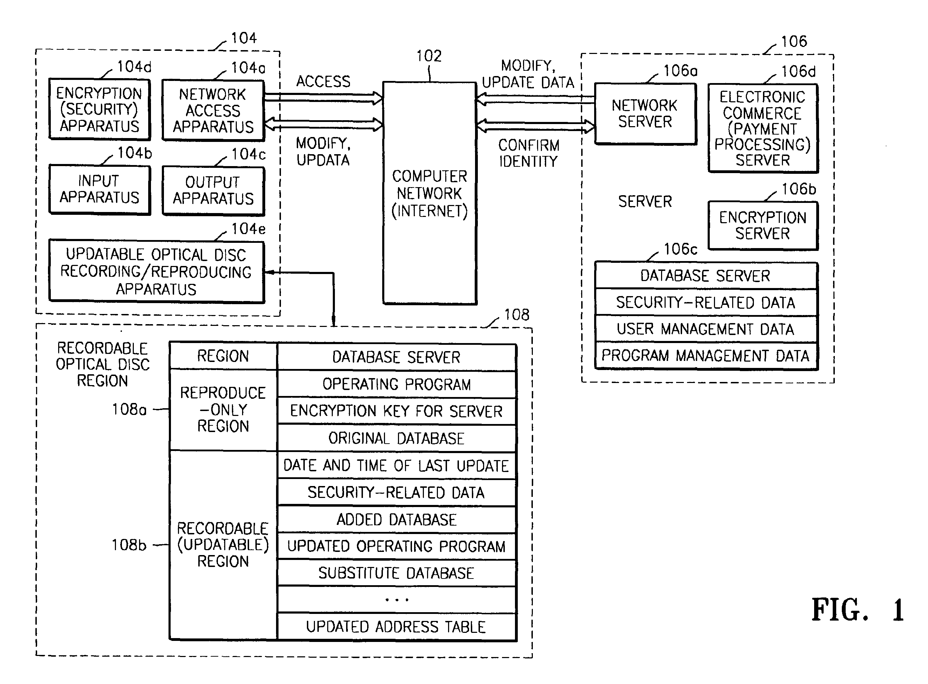

Figure 1 is a block diagram of the structure of a database updating apparatus according to the present invention.

The apparatus of Figure 1 includes a computer network 102, a user computer 104, which is connected to the computer network 102 and receives data which is updated/modified (hereinafter, referred to as updated/modified data), and a server 106 for transmitting updated/modified data to the user computer 104.

The computer network 102 is a network for transmitting and receiving data between computers and can be Ethernet, LAN, WAN, etc, but in the present invention, it is preferably the Internet.

The user computer 104 is implemented in the form of a desktop computer or a personal computer.

The user computer 104 has a network access apparatus 104a for permitting access to the computer network 102 and transmitting and receiving data through the computer network 102; an input apparatus 104b for inputting commands, data, etc., which are provided by a user, to the user computer 104; an output apparatus 104c for providing data requested by the user in the form of a hard copy, file, graphic, etc.; an encryption apparatus 104d for authenticating, together with the encryption server 106b of the server 106, the user; and an optical disc recording/reproducing apparatus 104e for recording data on or reproducing data from an updatable optical disc 108.

The optical disc recording/reproducing apparatus 104e reproduces data from the reproducible region and the recordable (updatable) region of the optical disc 108 or records modified/updated data, which is received through the network access apparatus 104a, in the recordable region of the optical disc 108.

The optical disc 108 has a reproducible region 108a and a recordable region 108b. Like a CD-ROM or DVD-ROM, data in the reproducible region 108a cannot be deleted and can be only reproduced. Like a CD-R, CD-RW, DVD-RAM, DVD-RW, data in the recordable region 108b can be deleted or recorded.

The optical disc 108 is provided to users through vendors of products, such as karaoke systems, encyclopedias, and navigation systems. In the reproducible region 108a, an operating program, an encryption key for server, and an initial version database are recorded. The operating program not only has a function for operating a database, but also a function for recording data, which is needed in the modification/update and is provided by the server 106.

The recordable region 108b is a region for recording modified/updated data provided from a product vendor. In the recordable region 108b, date and time of update, security related data, added databases, updated operating programs, substitute databases, an updated address table, etc., are recorded. Here, the date and time of the update is needed later to determine whether or not a database recorded in the optical disc 108 was updated.

The server 106 basically functions as a web server for transmitting and receiving data through the Internet and has hardware and software for communication with the user computer 104.

The server 106 has a network server 106a for transmitting modified/updated data; an encryption server 106b for processing, together with the encryption apparatus 104e of the user computer 104, user authentication; a database server 106c for servers having modified/updated data, security related data, consumer information, purchase information, etc., and providing this information to the user computer 104 connected through the computer network 102; and an electronic commerce server 106d for electronic commerce.

The operation of the apparatuses shown in Figure 1 will now be explained in detail.

The optical disc 108, on which are recorded an initial database (karaoke systems, encyclopedias, navigation systems, product catalogues, etc.) and an encryption key (for a server) used in the server 106 is distributed to the user.

The user installs the distributed optical disc 108 in the user computer 104 and uses the optical disc 108. The user computer 104 can access the computer network 102, and through the computer network 102, accesses the server 106, receives modified/updated data, and records the modified/updated data in the optical disc 108.

The network server 106a and the database server 106c are generally included in the server 106 operated by the database vendor. The database server 106c manages user related information and modified/updated data. When necessary, the encryption server 106b responsible for security is added.

The user can access the distributed database after registration in the server 106. Before accessing the database, the user computer 104 first compares the date and time of the last update of the database recorded in the optical disc 108 with the date and time of the last update of the database server 106c of the server 106. If they are not the same (this means that since the last update, additions and/or modifications of data, an operating program, or a database were made) the user computer 104 receives the modified/updated data transmitted from the server 106, automatically records the data in the recordable region 108b of the optical disc 108, and records information related to the data in the updated address table located in the recordable region 108b of the optical disc 108, in a predetermined way. The updated address table fulfills the same function as a file allocation table (FAT) used in an ordinary computer file management system. Then, the user can access the modified/updated database.

Information, which the optical disc recording/reproducing apparatus 104e will refer to when loading a disc, is recorded in the updated address table. The information recorded in the updated address table includes not only database address information, such as the address of each database recognition unit (object) and a substitute address, but also program address information, such as the address of a replaced or modified program module. Also, information on a physical error region of the recordable region can be recorded so that the region of an error or problem will not be used and problems which can occur during system operation can be prevented in advance.

It is not necessary to log the recording order or address of added databases, substitute databases, and updated operating programs. They can be recorded in order of occurrence in the updated address table.

Also, the total space of the recordable region is recorded along with the date and time of the last update. If the needed space is not available, the user is informed of this and transmission is stopped. In this case, a program that deletes unnecessary data and procures needed space can be used in the apparatus. This program checks the updated address table and finds regions which are not in use.

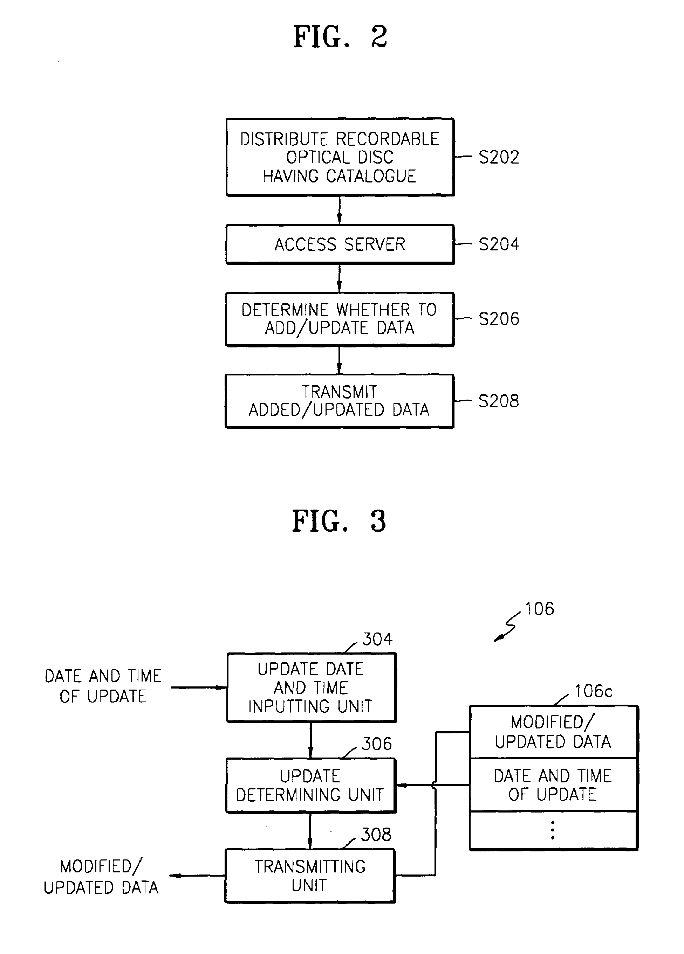

Figure 2 is a flowchart of an embodiment of a database updating method according to the present invention. An example of an optical disc 108 having catalogue information is explained in Figure 2.

First, a product vendor distributes catalogues by way of optical discs 108, containing information on products that is recorded in the reproducible region 108a of the optical disc 108 to the consumers. At this time, no special registration or management is needed. The encryption key of the vendor is recorded only when user authentication is needed in step S202.

A consumer accesses the server 106 of the product vendor through the computer network 102 in step S204.

After the consumer accesses the electronic commerce server 106d of the vendor through the computer network 102, the consumer registers as a buyer. Then, the electronic commerce server 104d adds the consumer's information to the database server 106c, guides the consumer to input a personal password to be used when buying a product, records the password in the database server 106c, and records an encrypted password for authentication of the personal password in the optical disc 108 of the consumer. By encrypting the password, password disclosure can be prevented and thereafter the buying process can proceed offline as well as online. Also, this can be used to direct mail (DM) to and identify the consumer. Furthermore, in this process, basic personal information of the consumer can be provided and thereafter this information can be used to analyze the consumer's buying pattern.

The date and time of the last update recorded in the optical disc 108 of the consumer is transmitted and received, and it is determined whether or not to modify /update data in step S206.

If there are any new additions or modifications to be added when the date and time of the last update recorded in the optical disc 108 of the consumer is received, the database server 106c transmits the needed data so that the data can be recorded in the optical disc 108 of the consumer, and the data can be used, being linked with the existing catalogue information in step S208. This process can be more quickly done if executed during an idle time when the consumer temporarily stops the current work. By doing so, information on added products, changed prices, stock, functions, or states can be easily updated.

After the consumer places an order through product searching, the server 106 receives basic information, such as payment means and delivery place, and requests input of credit card or other payment means. Information on payment means is transmitted after a safe transmission route is secured through the encryption server 106b. The encryption server 106b confirms the identity by checking the password of the consumer. When the identity is checked and input of the payment means is completed, the vendor provides delivery of the ordered product, transmits related purchase information to the consumer, and records that information in the optical disc 108. This is a measure to cope with damages, which can occur in the delivery, refund or exchange of the product when the product has a defect, and possible refusal to buy the product.

Figure 3 is a block diagram of the structure of a server 106 according to the present invention. The database server 106C in Figure 3 stores modified/updated data and date and time of update.

An date and time of update inputting unit 304 receives the date and time of the last update of the database installed in the user computer 104 from the user computer 104 which accesses the database server 106c through a computer network.

An update determining unit 306 compares the date and time of the last update received from the user computer 104 with the date and time of the last update stored in the database server 106c to determine whether or not the database installed in the user computer 104 needs to be updated.

If the update determining unit 306 determines that updating the database installed in the user computer 104 is needed, a transmitting unit 308 reads modified/updated data from the database server 106c and transmits the data to the user computer 104.

The date and time of update inputting unit 304, the update determining unit 306, and the transmitting unit 308 of Figure 3 can be implemented as hardware, but are preferably implemented as software by programs. For example, a web server receives the date and time of update of the database installed in the user computer 104 and transmitted from the user computer 104 through the user interface, and then determines whether or not an update is needed based on the date and time of update. If an update is needed, the web server is programmed so that the modified/updated data stored in the database server 106c is automatically transmitted to the user computer 104.

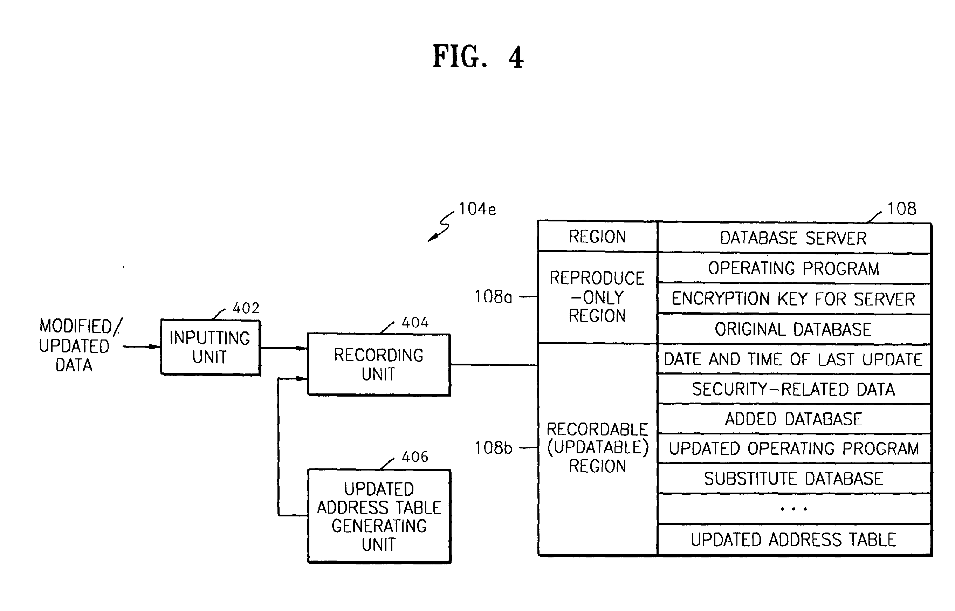

Figure 4 is a block diagram of an embodiment of an optical disc recording/reproducing apparatus 104e according to the present invention. The optical disc recording/reproducing apparatus 104e of Figure 4 corresponds to the server 106 of Figure 3, and the server 106 determines whether or not an update is needed.

Referring to Figure 4, a database and its update date and time are recorded in the optical disc 108.

The inputting unit 402 receives the modified/updated data from the user computer 104.

The recording unit 404 records the modified/updated data, the date and time of update, and an updated address table on the disc.

The updated address table generating unit 406 generates an updated address table having addresses of the optical disc 108 on which updated contents are recorded and provides the table to the recording unit 404.

In the apparatus of Figure 4, the updated address table generating unit 406 is preferably implemented as software by an operating program.

The operating program has, at the minimum, a module for updating the database. This updating module tries to access the server 106 through the user computer 104 and the computer network 102, and if the server 106 is accessed, reads the date and time of the last update from the optical disc 108 and provides the date and time of update to the server 106.

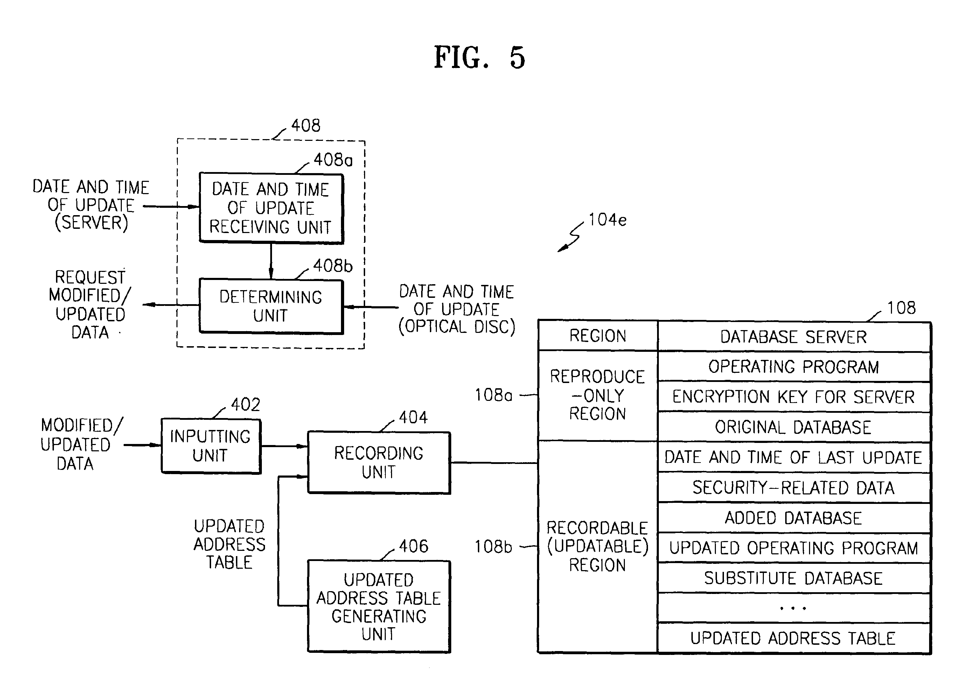

In the apparatus of Figure 4, the optical disc recording/reproducing apparatus 104e determines whether or not update is needed, and if update is needed, requests the server 106 to transmit modified/updated data, unlike the apparatus of Figure 5 which will be described later. Figure 5 is a block diagram of another embodiment of an optical disc recording/reproducing apparatus 104e according to the present invention.

Referring to Figure 5, a database and its update date and time are recorded in the optical disc 108.

The inputting unit 402 receives the modified/updated data from the user computer 104.

The recording unit 404 records the modified/updated data, the date and time of update, and the updated address table on the disc.

The updated address table generating unit 406 generates an updated address table having addresses of the optical disc 108 in which updated contents are recorded and provides the table to the recording unit 404.

The update determining unit 408 accesses the server 106 through the user computer 104 and the computer network 102 and then determines whether or not the database recorded on the optical disc 108 was updated. If it is determined that an update of the database recorded on the optical disc 108 is needed, the update determining unit 408 requests the server 106 to transmit modified/updated data through the user computer 104 and the computer network 106.

The update determining unit 408 has a date and time of update receiving unit 408A for trying to access the server 106 through the user computer 104 and the computer network 102, and if the server 106 is accessed, receiving the date and time of update of the database provided by the server 106, and also has a determining unit 408B for determining whether or not an update of the database recorded on the optical disc 108 is needed by comparing the date and time of update of the database of the server 106 with the date and time of update recorded on the optical disc 108.

In the apparatus of Figure 5, the updated address table generating unit 406 is preferably implemented as software by an operating program.

The operating program has at least a module for updating the database. This updating module tries to access the server 106 through the user computer 104 and the computer network 102, and if the server 106 is accessed, requests to transmit the date and time of update of the database of the server 106. If the date and time of update of the database of the server 106 is input, the operating program determines whether or not the database was updated by comparing the input date and time of update with the date and time of the last update recorded on the optical disc 108. If an update is needed, the operating program requests the server 106 to transmit modified/updated data, through the user computer 104 and the computer network 102.

As described above, the present invention provides a user with a means for easily maintaining a user database that is up-to-date.

This can be applied to all systems that use a database, including karaoke systems, encyclopedias, and navigational systems. Also, since user information and user computer environments are stored together, the present invention solves the problems caused by change of location and different platforms.

According to the present invention, database vendors (product providers) can save time and money, easily provide up-to-date data, and easily manage users. Since modification can be easily done, even when a program or data containing errors is transmitted, various functions can be easily added or changed. The user can be easily identified through the user optical disc relatively easily and securely.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings) , or to any novel one, or any novel combination, of the steps of any method or process so disclosed.

## Claims

1. A database updating apparatus comprising:
a computer network (102);
a server (106) for providing database-related information through the computer network (102); and
a user computer (104) for accessing the server (106) through the computer network (102) and retrieving the database-related information, wherein the user computer includes an optical disc recording/reproducing apparatus (104e) for recording data in or reproducing data from an optical disc (108), in which a database and the date and time of the last update is recorded, and is programmed to record modified/updated data, which is transmitted from the server (106), on the optical disc, and wherein the server is programmed so that the server receives the date and time of the last update, which is recorded on the optical disc and transmitted from the user computer (104), and if modification/update is needed, transmits modified/updated data to the user computer (104) in order for the user computer to record the modified/updated data on the optical disc (108) through the optical disc recording/reproducing apparatus (104e).

2. The apparatus of claim 1, wherein the optical disc (108) has a reproducible region (108a) and a recordable region (108b), and the user computer records modified/updated data transmitted from the server and the date and time of the last update in the recordable region.

3. The apparatus of claim 1 or 2, wherein the server (106) transmits a purchase order, which is received from the user computer (104), to the user computer so that the user computer records the purchase order on the optical disc (108).

4. A database updating method comprising the steps of:
permitting a user computer (104) having a recordable disc (108), on which is recorded a database that a database vendor can provide, to access a server (106) of the database vendor through a computer network (102);
receiving the date and time of the last update of the database recorded on the disc from the user computer (104) and determining whether or not modification/update of the database is needed; and
transmitting modified/updated data to the user computer (104) if modification/update is needed so that the user computer records modified/updated data on the disc.

5. The method of claim 4, wherein the disc has a reproducible region (108a) and a recordable region (108b), and the user computer records the modified/updated data transmitted from the server (106) in the recordable region.

6. The method of claim 5, wherein the user computer (104) records the date and time of the last update of the disc in the recordable region.

7. The method of claim 4, 5 or 6 further comprising the steps of:
receiving a purchase order of the user through the user computer (104); and
transmitting information related to the purchase order to the user computer (104) so that the user computer can record the information on the recordable disc.

8. A server for providing database-related information through a computer network (102), the server comprising:
a database server (106c) for storing at the minimum modified/updated data of the database and the date and time of update;
a means (408a) for receiving the date and time of the last update of a database installed in a user computer from the user computer (104) which accesses the server (106) through the computer network (102);
a means (408b) for determining whether or not an update is needed in the database installed in the user computer (104) by comparing the date and time of the last update input by the user with the date and time of update stored in the database server; and
a means for reading the modified/updated data from the memory and transmitting the data, if the determining means determines that an update of the database installed in the user computer is needed.

9. A disc recording/reproducing apparatus which is installed in a user computer and records/reproduces a recordable disc, the apparatus comprising:
a recordable disc (108) on which an updatable database and its update date and time are recorded;
an inputting means (104a) for receiving modified/updated data of the database from the user computer;
a recording means (104e) for recording the modified/updated data of the database, the date and time of update, and an updated address table on the disc; and
a means (406) for generating an updated address table having addresses, of which the updated contents are recorded on the disc, and providing the updated address table to the recording means.

10. The apparatus of claim 9, wherein an operating program for updating the database at the minimum is recorded on the disc (108), the operating program tries to access a server (106) for providing services of the database through the user computer (104) and the computer network (102), and if the server is accessed, reads the date and time of the last update from the disc, and provides the date and time of the last update to the server.

11. The apparatus of claim 9 or 10, wherein the disc (108) has a reproducible region (108a) and a recordable region (108b), and the modified/updated data of the database and the date and time of its update are recorded in the recordable region.

12. The apparatus of claim 11, wherein the disc (108) is an optical disc.

13. A disc recording/reproducing apparatus which is installed in a user computer (104) and records/reproduces a recordable disc, the apparatus comprising:
a recordable disc (108) on which updatable database and the date and time of its update are recorded;
a means (104a) for accessing a server (106) providing services of the database through the user computer and the computer network (102), determining whether or not an update of the database recorded on the disc is needed, and if it is determined that update of the database recorded on the disc is needed, requesting the server to transmit modified/updated data through the user computer (104) and the computer network (102);
a means (402) for receiving modified/updated data of the database provided from the server through the user computer and the computer network;
a recording means (404) for recording modified/updated data of the database, the date and time of update, and an updated address table on the disc; and
a means (406) for generating an updated address table having addresses, of which the updated contents are recorded on the disc, and providing the updated address table to the recording means.

14. The apparatus of claim 13, wherein the requesting means comprises:
a means (408a) for trying to access a server for providing services of the database through the user computer and the computer network, and if the server is accessed, receiving the date and time of update of the database provided by the server; and
a means (408b) for determining whether or not an update of the database recorded on the disc is needed by comparing the date and time of update of the database of the server with the date and time of update recorded on the disc.
